# EUROPEAN PATENT APPLICATION

(11) **EP 4 132 135 A1**
(43) Date of publication of application: **08.02.2023**
(21) Application number: 22188161.8
(22) Date of filing: 01.08.2022
(51) Int. Cl.: H04W 56/00

(54) **METHOD AND USER EQUIPMENT FOR PDCCH PAGING EARLY INDICATION DETECTION**

(30) Priority: 02.08.2021 US 202163228196 P; 08.07.2022 US 202217860744
(71) Applicant: MediaTek Inc., Hsinchu City 30078 (TW)
(72) Inventor: WU, Wei-De, Hsinchu City (TW); LIAO, Yi-Ju, Hsinchu City (TW); LIAO, Pei-Kai, Hsinchu City (TW)
(74) Representative: Patentship Patentanwaltsgesellschaft mbH

(57) **Abstract**

Methods and a user equipment (110), UE, are provided for scheduling for PDCCH PEI detection. In particular, a base station (121), BS, can transmit a higher layer signaling (1210) to a UE (110). The higher layer signaling (1210) includes a configuration of at least one configurable PDCCH candidate number for PEI procedure used under a non-active mode. After receiving the higher layer signaling (1210), the UE (110) performs blind decoding under the non-active mode according to the configuration of the at least one configurable PDCCH candidate number.

## Description

### TECHNICAL FIELD

The disclosed embodiments relate generally to wireless communication, and, more particularly, to method and user equipment for physical downlink control channel (PDCCH) paging early indication (PEI) detection.

### BACKGROUND

In conventional network of 3rd generation partnership project (3GPP) 5G new radio (NR), a paging early indication (PEI) is introduced for reducing user equipment (UE) operations under non-active mode. Therefore, purpose of saving power consumption can be achieved. However, the complexity of detecting PEI in physical downlink control channel (PDCCH) by a UE is still too high and it may cause unnecessary power consumption.

### SUMMARY

A first aspect of the invention provides a method, comprising: receiving, by a user equipment (UE), a higher layer signaling from a network, wherein the higher layer signaling includes a configuration of at least one configurable physical downlink control channel (PDCCH) candidate number for paging early indication (PEI) procedure used under a non-active mode; and performing, by the UE, blind decoding under the non-active mode according to the configuration of the at least one configurable PDCCH candidate number.

In a first embodiment of the first aspect, the configuration includes a downlink control information (DCI) format dedicated for PEI procedure used under the non-active mode.

In a second embodiment of the first aspect, the step of performing blind decoding further includes: performing, by the UE, blind decoding under the non-active mode to detect whether a PEI of a DCI is transmitted on a PDCCH according to the configuration of the at least one configurable PDCCH candidate number.

In a third embodiment of the first aspect in combination with the second embodiment of the first aspect, the method further comprises: determining, by the UE, whether a demodulation reference signal (DM-RS) of the PDCCH includes an indication associated with paging occasion (PO) monitoring.

In a fourth embodiment of the first aspect in combination with the second embodiment of the first aspect, the method further comprises: determining, by the UE, an index of waking up UE group according to a field of the DCI.

In a fifth embodiment of the first aspect, the higher layer signaling includes a system information block (SIB) .

In a sixth embodiment of the first aspect, the configuration of the at least one configurable PDCCH candidate number includes at least one control channel element (CCE) aggregation level associated with the at least one configurable PDCCH candidate number.

In a seventh embodiment of the first aspect, the non-active mode includes an idle mode or an inactive mode.

In an eighth embodiment of the first aspect, the higher layer signaling includes a control resource set (CORESET) configuration for PEI procedure.

A second aspect of the invention provides a user equipment (UE) comprising: a transceiver that: receives a higher layer signaling from a network, wherein the higher layer signaling includes a configuration of at least one configurable physical downlink control channel (PDCCH) candidate number for paging early indication (PEI) procedure used under a non-active mode; a decoding circuit that: performs blind decoding under the non-active mode according to the configuration of the at least one configurable PDCCH candidate number.

In a first embodiment of the second aspect, the configuration includes a downlink control information (DCI) format dedicated for PEI procedure used under the non-active mode.

In a second embodiment of the second aspect, the decoding circuit further: performs blind decoding under the non-active mode to detect whether a PEI of a DCI is transmitted on a PDCCH according to the configuration of the at least one configurable PDCCH candidate number.

In a third embodiment of the second aspect in combination with the second embodiment of the second aspect, the decoding circuit further: determines whether a demodulation reference signal (DM-RS) of the PDCCH includes an indication associated with paging occasion (PO) monitoring.

In a fourth embodiment of the second aspect in combination with the second embodiment of the second aspect, the decoding circuit further: determines, by the UE, an index of waking up UE group according to a field of the DCI.

In a fifth embodiment of the second aspect, the higher layer signaling includes a system information block (SIB) .

In a sixth embodiment of the second aspect, the configuration of the at least one configurable PDCCH candidate number includes at least one control channel element (CCE) aggregation level associated with the at least one configurable PDCCH candidate number.

In a seventh embodiment of the second aspect, the non-active mode includes an idle mode or an inactive mode.

In an eighth embodiment of the second aspect, the higher layer signaling includes a control resource set (CORESET) configuration for PEI procedure.

A third aspect of the invention provides a method, comprising: transmitting, by a base station (BS), a higher layer signaling to a user equipment (UE), wherein the higher layer signaling includes a configuration of at least one configurable physical downlink control channel (PDCCH) candidate number for paging early indication (PEI) procedure used under a non-active mode, so that the UE is capable of performing blind decoding under the non-active mode according to the configuration of the at least one configurable PDCCH candidate number.

In an embodiment of the third aspect, the configuration includes a downlink control information (DCI) format dedicated for PEI procedure used under the non-active mode.

Method and user equipment (UE) are provided for scheduling for physical downlink control channel (PDCCH) paging early indication (PEI) detection. In particular, a base station (BS) can transmit a higher layer signaling to a UE. The higher layer signaling may include a configuration of at least one configurable PDCCH candidate number for PEI procedure used under a non-active mode. Then, after receiving the higher layer signaling, the UE can perform blind decoding under the non-active mode according to the configuration of the at least one configurable PDCCH candidate number.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary 5G new radio network for PDCCH PEI detection in accordance with embodiments of the current invention.
Figure 2 is a simplified block diagram of the gNB and the UE in accordance with embodiments of the current invention.
Figure 3A illustrates one embodiment of message transmissions in accordance with embodiments of the current invention.
Figure 3B illustrates one embodiment of message transmissions in accordance with embodiments of the current invention.
Figure 4 is a flow chart of a method of PDCCH PEI detection in accordance with embodiments of the current invention.
Figures 5A to 5C are flow charts of a method of PDCCH PEI detection in accordance with embodiments of the current invention.

### DETAILED DESCRIPTION

Reference will now be made in detail to some embodiments of the invention, examples of which are illustrated in the accompanying drawings.

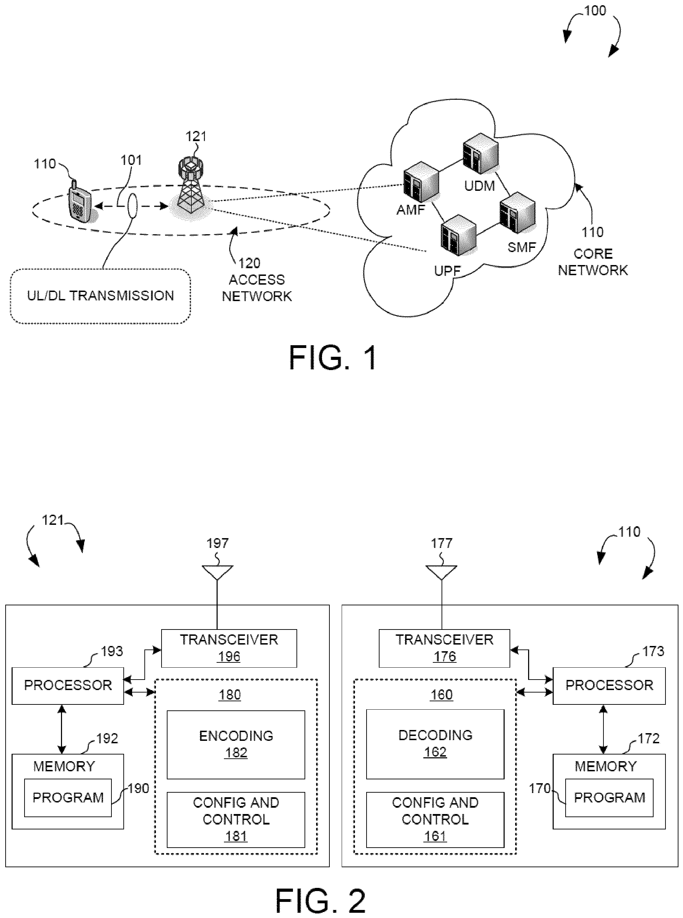

Figure 1 illustrates an exemplary 5G new radio (NR) network 100 for physical downlink control channel (PDCCH) paging early indication (PEI) detection in accordance with aspects of the current invention. The 5G NR network 100 includes a user equipment (UE) 110 communicatively connected to a gNB 121 operating in a licensed band (e.g., 30GHz~300GHz for millimeter wave (mmWave)) of an access network 120 which provides radio access using a Radio Access Technology (RAT) (e.g., the 5G NR technology). The access network 120 is connected to a 5G core network 130 by means of the NG interface, more specifically to a User Plane Function (UPF) by means of the NG user-plane part (NG-u), and to a Mobility Management Function (AMF) by means of the NG control-plane part (NG-c). One gNB can be connected to multiple UPFs/AMFs for the purpose of load sharing and redundancy. The UE 110 may be a smart phone, a wearable device, an Internet of Things (IoT) device, and a tablet, etc. Alternatively, UE 110 may be a Notebook (NB) or Personal Computer (PC) inserted or installed with a data card which includes a modem and RF transceiver(s) to provide the functionality of wireless communication.

The gNB 121 may provide communication coverage for a geographic coverage area in which communications with the UE 110 is supported via a communication link 101. The communication link 101 shown in the 5G NR network 100 may include uplink (UL) transmissions from the UE 110 to the gNB 121 (e.g., on the Physical Uplink Control Channel (PUCCH) or Physical Uplink Shared Channel (PUSCH)) or downlink (DL) transmissions from the gNB 121 to the UE 110 (e.g., on the PDCCH or Physical Downlink Shared Channel (PDSCH)).

Figure 2 is a simplified block diagram of the gNB 121 and the UE 110 in accordance with embodiments of the present invention. For the gNB 121, an antenna 197 transmits and receives radio signal. A radio frequency (RF) transceiver module 196, coupled with the antenna, receives RF signals from the antenna, converts them to baseband signals and sends them to processor 193. RF transceiver 196 also converts received baseband signals from the processor 193, converts them to RF signals, and sends out to antenna 197. Processor 193 processes the received baseband signals and invokes different functional modules and circuits to perform features in the gNB 121. Memory 192 stores program instructions and data 190 to control the operations of the gNB 121.

Similarly, for the UE 110, antenna 177 transmits and receives RF signals. RF transceiver module 176, coupled with the antenna, receives RF signals from the antenna, converts them to baseband signals and sends them to processor 173. The RF transceiver 176 also converts received baseband signals from the processor 173, converts them to RF signals, and sends out to antenna 177. Processor 173 processes the received baseband signals and invokes different functional modules and circuits to perform features in the UE 110. Memory 172 stores program instructions and data 170 to control the operations of the UE 110.

The gNB 121 and the UE 110 also include several functional modules and circuits that can be implemented and configured to perform embodiments of the present invention. In the example of figure 2, the gNB 121 includes a set of control functional modules and circuit 180. Encoding circuit 182 handles encoding procedure and associated network parameters for the UE 110. Configuration and control circuit 181 provides different parameters to configure and control the UE 110. The UE 110 includes a set of control functional modules and circuit 160. Decoding circuit 162 handles blind decode procedure and associated network parameters. Configuration and control circuit 161 handles configuration and control parameters from the gNB 121.

Note that the different functional modules and circuits can be implemented and configured by software, firmware, hardware, and any combination thereof. The function modules and circuits, when executed by the processors 193 and 173 (e.g., via executing program codes 190 and 170), allow the gNB 121 and the UE 110 to perform embodiments of the present invention.

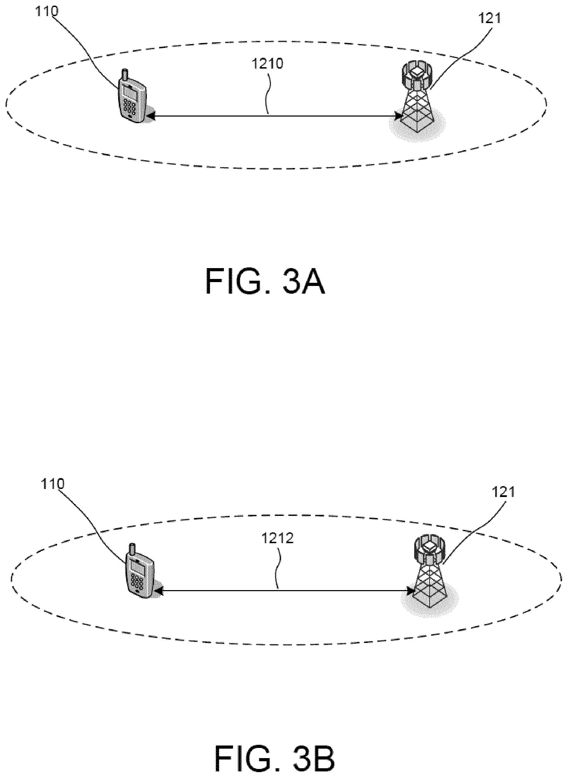

Figure 3A illustrates one embodiment of message transmissions in accordance with one novel aspect. In particular, the gNB 121 transmits a higher layer signaling 1210 to the UE 110. The higher layer signaling 1210 includes a configuration of at least one configurable PDCCH candidate number for PEI procedure used under a non-active mode. Accordingly, the UE 110 performs blind decoding under the non-active mode according to the configuration of the at least one configurable PDCCH candidate number.

In some embodiments, the higher layer signaling 1210 is a system information block (SIB). The configuration includes a new downlink control information (DCI) format dedicated for PEI procedure used under the non-active mode. In particular, the legacy DCI format (i.e., DCI format 2_6) used under an active mode (i.e., connected mode) is used as a wake-up indication, and this legacy DCI format is not configurable. The new DCI format, which may be named as DCI format 2_7, of the present invention is dedicated for PEI procedure used under the non-active mode (i.e., an idle mode or an inactive mode), and the new DCI format is configurable.

More specifically, the configuration of the at least one configurable PDCCH candidate number includes at least one control channel element (CCE) aggregation level associated with the at least one configurable PDCCH candidate number. In some implementations, the configuration of the at least one configurable PDCCH candidate number includes three CCE aggregation levels which are aggregation level 4, aggregation level 8 and aggregation level 16. The aggregation level 4 is associated with five configurable PDCCH candidate numbers which are 0, 1, 2, 3, 4. The aggregation level 8 is associated with three configurable PDCCH candidate numbers which are 0, 1, 2. The aggregation level 16 is associated with two configurable PDCCH candidate numbers which are 0, 1.

For example, the configuration of the at least one configurable PDCCH candidate number is implemented in search space information element (IE) as below:

```
 SearchSpaceExt ::=    SEQUENCE {
 ...
 ...
 dci-Format2-7    SEQUENCE {
 NumberOfCandidate-PEI SEQUENCE {
   AggregationLevel4 ENUMERATED {0, 1, 2, 3, 4} OPTIONAL,
   AggregationLevel8 ENUMERATED {0, 1, 2} OPTIONAL,
   AggregationLevel16 ENUMERATED {0, 1} OPTIONAL,
 }
```

Figure 3B illustrates one embodiment of message transmissions in accordance with one novel aspect. In particular, the UE 110 performs blind decoding under the non-active mode to detect whether a PEI of a DCI 1212 is transmitted on a PDCCH according to the configuration of the at least one configurable PDCCH candidate number.

In some cases, the UE 110 determines whether a demodulation reference signal (DM-RS) of the PDCCH includes an indication associated with paging occasion (PO) monitoring.

For example, when the PEI is transmitted only when the UE 110 in the PO is paged, a DM-RS scrambling identification (ID) of a control resource set (CORESET) for the UE 110 to monitor the PEI is used as the indication which is set as one PO related value (e.g., Paging-RNTI (P-RNTI) or exclusive OR (XOR) of cell-ID and P-RNTI). In addition, the UE 110 may skip PO monitoring when the UE 110 detects the DM-RS of the PDCCH without the specified DM-RS scrambling ID.

For another example, when the PEI is always transmitted to indicate the UE 110 whether to monitor PO, the DM-RS scrambling ID of the CORESET for the UE 110 to monitor the PEI is used as the indication which is set as two PO related values. One of the PO related values is for indicating the UE 110 to monitor PO, and the other is for indicating the UE 110 not to monitor PO. In addition, the UE 110 may skip PO monitoring when the UE 110 detects the DM-RS of the PDCCH with the specified DM-RS scrambling ID for indicating no PO monitoring.

In some cases, the UE 110 determines an index waking up UE group according to a field of the DCI 1212. In particular, the index is used for indicating the UE 110 the UE group(s) to be woken up.

In some implementations, when the PEI is transmitted only when the UE 110 in the PO is paged, **┌log₂(*M* + 1)┐** bit (s) DCI payload of the DCI 1212 is utilized for index (i.e., code-point) mapping, while 'M' is the number of the UE group(s). The index mapping provides: (1) one indication for waking up all UE group(s); and (2) one-to-one indication(s) for waking up each UE group.

For example, when there are three (i.e., M=3) UE groups 'A', 'B' and 'C', 2 bits DCI payload of the DCI 1212 is utilized for index (i.e., code-point) mapping as specified in the table below:

| Index (code-point) | Utilization |
|---|---|
| '00' | Wake up all UE groups 'A', 'B', 'C' |
| '01' | Wake up UE group 'A' |
| '10' | Wake up UE group 'B' |
| '11' | Wake up UE group 'C' |

In some implementations, when the PEI is always transmitted to indicate the UE 110 whether to monitor PO., **┌log₂(*M* + 2)┐** bit(s) DCI payload of the DCI 1212 is utilized for index mapping, while 'M' is the number of the UE group(s). The index mapping provides: (1) one indication for waking up all UE group(s); (2) one-to-one indication(s) for waking up each UE group; and (3) one indication for waking up no UE group.

For example, when there are six (i.e., M=6) UE groups 'A' to 'F', 3 bits DCI payload of the DCI 1212 is utilized for index (i.e., code-point) mapping as specified in the table below:

| Index (code-point) | Utilization |
|---|---|
| '000' | Wake up all UE groups 'A' to 'F' |
| '001' | Wake up UE group 'A' |
| '010' | Wake up UE group 'B' |
| '011' | Wake up UE group 'C' |
| '100' | Wake up UE group 'D' |
| '101' | Wake up UE group 'E' |
| '110' | Wake up UE group 'F' |
| '111' | Wake up no UE group |

In some embodiments, the higher layer signaling 1210 includes a control resource set (CORESET) configuration for PEI procedure. In particular, when a CORESET is used for PEI PDCCH(s) and legacy PDCCH(s), the CORESET configuration transmitted to the UE 110 for PEI procedure (i.e., the CORESET configuration transmitted to the PEI-capable UE 110) is different from a CORESET configuration transmitted to other PEI-incapable UE(s).

In some implementations, different or additional PEI CORESET parameter(s) may be included in the higher layer signaling 1210. The PEI-capable UE 110 UE may use the CORESET information which is for legacy PDCCH(s), and may apply the different or additional PEI CORESET parameter(s) for PEI detection.

In some implementations, resource occupation priority may be: (1) given to PEI PDCCH(s) when the UE 110 determines to skip monitoring PO; or (2) given to legacy PDCCH(s) when the UE 110 determines to monitor PO.

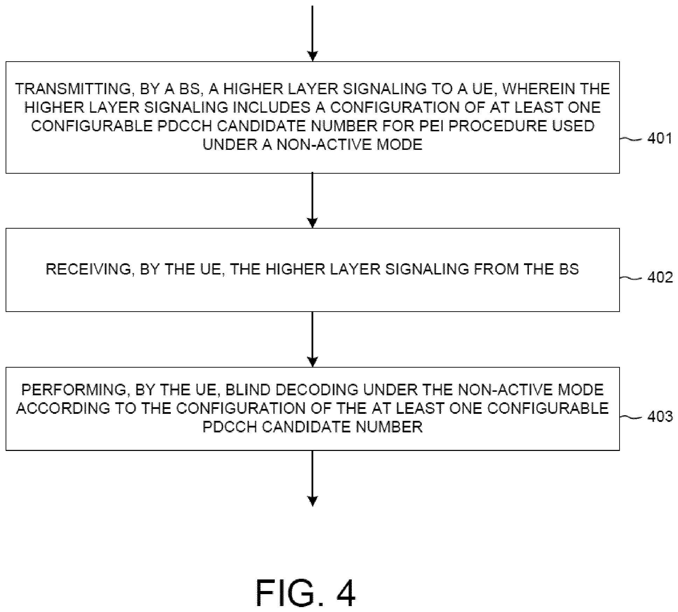

Figure 4 is a flow chart of a method of PDCCH PEI detection from both BS and UE perspectives in a 5G/NR network in accordance with one novel aspect. In step 401, a BS transmit a higher layer signaling to a UE. The higher layer signaling includes a configuration of at least one configurable PDCCH candidate number for PEI procedure used under a non-active mode. In step 402, the UE receives the higher layer signaling from the BS. In step 403, the UE perform blind decoding under the non-active mode according to the configuration of the at least one configurable PDCCH candidate number.

In some embodiments, the configuration includes a DCI format dedicated for PEI procedure used under the non-active mode.

In some embodiments, the higher layer signaling includes a SIB.

In some embodiments, the configuration of the at least one configurable PDCCH candidate number includes at least one CCE aggregation level associated with the at least one configurable PDCCH candidate number.

In some embodiments, the non-active mode includes an idle mode or an inactive mode.

In some embodiments, the higher layer signaling includes a CORESET configuration for PEI procedure.

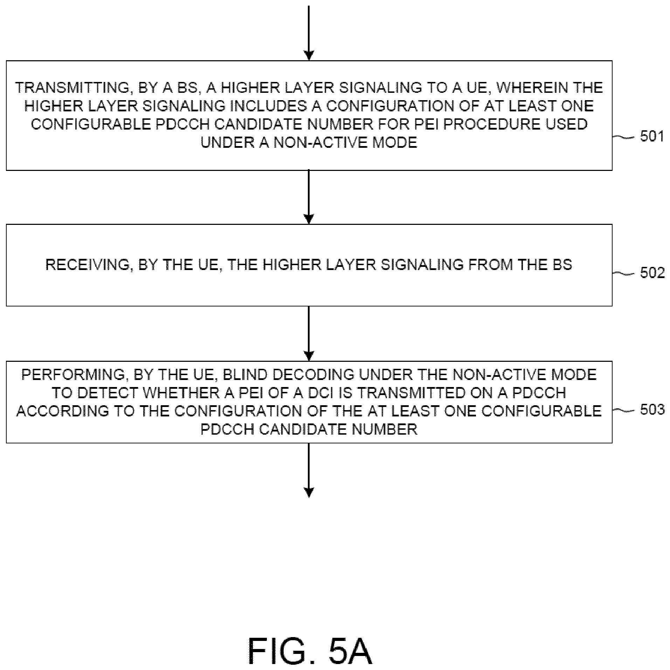

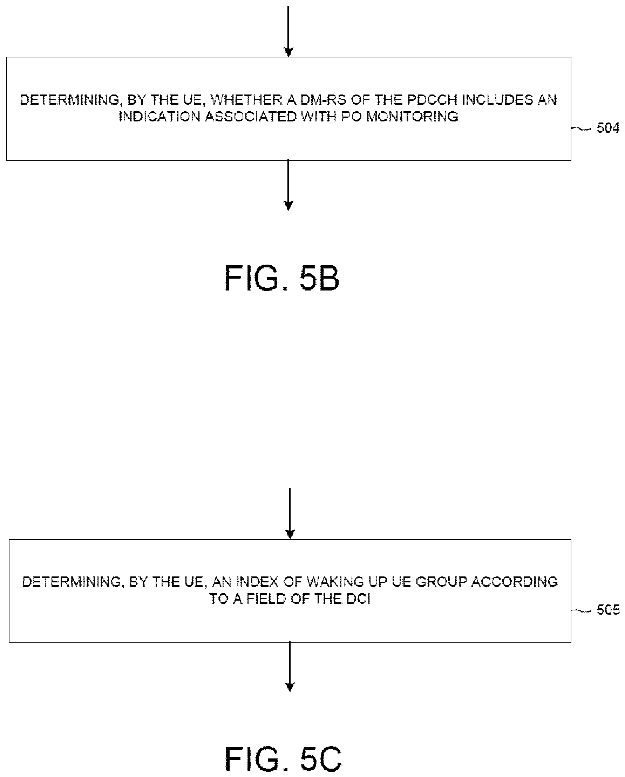

Figures 5A to 5C are flow charts of a method of PDCCH PEI detection from both BS and UE perspectives in a 5G/NR network in accordance with one novel aspect. In step 501, a BS transmit a higher layer signaling to a UE. The higher layer signaling includes a configuration of at least one configurable PDCCH candidate number for PEI procedure used under a non-active mode. In step 502, the UE receives the higher layer signaling from the BS. In step 503, the UE perform blind decoding under the non-active mode to detect whether a PEI of a DCI is transmitted on a PDCCH according to the configuration of the at least one configurable PDCCH candidate number.

In some embodiments, the method further includes step 504. In step 504, the UE determines whether a DM-RS of the PDCCH includes an indication associated with PO monitoring. In some embodiments, the method further includes step 505. In step 505, the UE determines an index of waking up UE group according to a field of the DCI.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
receiving (402), by a user equipment (110), UE, a higher layer signaling (1210) from a network, wherein the higher layer signaling (1210) includes a configuration of at least one configurable physical downlink control channel, PDCCH, candidate number for paging early indication, PEI, procedure used under a non-active mode; and
performing (403), by the UE (110), blind decoding under the non-active mode according to the configuration of the at least one configurable PDCCH candidate number.

2. The method of claim 1, wherein the configuration includes a downlink control information, DCI, format dedicated for PEI procedure used under the non-active mode, and wherein the higher layer signaling (1210) includes a system information block, SIB, or a control resource set, CORESET, configuration for PEI procedure.

3. The method of claim 1, wherein the step of performing blind decoding further includes:
performing (503), by the UE (110), blind decoding under the non-active mode to detect whether a PEI of a DCI (1212) is transmitted on a PDCCH according to the configuration of the at least one configurable PDCCH candidate number.

4. The method of claim 3, further comprising:
determining (504), by the UE (110), whether a demodulation reference signal, DM-RS, of the PDCCH includes an indication associated with paging occasion, PO, monitoring.

5. The method of claim 3, further comprising:
determining (505), by the UE (110), an index of waking up UE group according to a field of the DCI (1212).

6. The method of claim 1, wherein the configuration of the at least one configurable PDCCH candidate number includes at least one control channel element, CCE, aggregation level associated with the at least one configurable PDCCH candidate number.

7. The method of claim 1, wherein the non-active mode includes an idle mode or an inactive mode.

8. A user equipment (110), UE, comprising:
a transceiver (176) that:
receives (402) a higher layer signaling (1210) from a network, wherein the higher layer signaling (1210) includes a configuration of at least one configurable physical downlink control channel, PDCCH, candidate number for paging early indication, PEI, procedure used under a non-active mode;
a decoding circuit (162) that:
performs (403) blind decoding under the non-active mode according to the configuration of the at least one configurable PDCCH candidate number.

9. The UE (110) of claim 8, the configuration includes a downlink control information, DCI, format dedicated for PEI procedure used under the non-active mode, and wherein the higher layer signaling (1210) includes a system information block, SIB, or a control resource set, CORESET, configuration for PEI procedure.

10. The UE (110) of claim 8, wherein the decoding circuit (162) further:
performs (503) blind decoding under the non-active mode to detect whether a PEI of a DCI (1212) is transmitted on a PDCCH according to the configuration of the at least one configurable PDCCH candidate number.

11. The UE (110) of claim 10, wherein the decoding circuit (162) further:
determines (504) whether a demodulation reference signal, DM-RS, of the PDCCH includes an indication associated with paging occasion, PO, monitoring.

12. The UE (110) of claim 10, wherein the decoding circuit (162) further:
determines (505), by the UE (110), an index of waking up UE group according to a field of the DCI (1212).

13. The UE (110) of claim 8, wherein the configuration of the at least one configurable PDCCH candidate number includes at least one control channel element, CCE, aggregation level associated with the at least one configurable PDCCH candidate number.

14. A method, comprising:
transmitting (401, 501), by a base station (121), BS, a higher layer signaling (1210) to a user equipment (110), UE, wherein the higher layer signaling (1210) includes a configuration of at least one configurable physical downlink control channel, PDCCH, candidate number for paging early indication, PEI, procedure used under a non-active mode, so that the UE (110) is capable of performing blind decoding under the non-active mode according to the configuration of the at least one configurable PDCCH candidate number.

15. The method of claim 14, wherein the configuration includes a downlink control information, DCI, format dedicated for PEI procedure used under the non-active mode.
